# EUROPÄISCHE PATENTANMELDUNG

(11) **EP 2 597 289 A2**
(43) Veröffentlichungstag der Anmeldung: **29.05.2013**
(21) Anmeldenummer: 12192009.4
(22) Anmeldetag: 09.11.2012
(51) Int. Cl.: F02D 19/06, F02D 19/08, F02D 37/02, F02D 41/06, F02D 11/10, F02D 41/00, F02D 37/00, F02D 41/40

(54) **Verfahren und Steuergerät zum Starten einer mit Ethanol oder einer Mischung aus Ethanol und Ottokraftstoff betriebenen Brennkraftmaschine**

(30) Priorität: 22.11.2011 DE 102011086784
(71) Anmelder: ROBERT BOSCH GMBH, 70442 Stuttgart (DE)
(72) Erfinder: Jung, Achim, 71254 Ditzingen (DE); Nack, Laurent, 70174 Stuttgart (DE); Pechan, Oliver, 201206 Shanghai (CN)

(57) **Zusammenfassung**

Es wird ein Verfahren für den Kaltstart einer mit Ethanol betriebenen Brennkraftmaschine vorgeschlagen, bei der durch gezielte Androsslung im Saugrohr 3 der Brennkraftmaschine ein sicherer Kaltstart erreicht werden kann.

Es zeigt ein Verfahren zum Starten einer Brennkraftmaschine (10) umfassend mindestens ein Einspritzventil (4), eine Zündkerze (2), eine Drosselklappe (16) und einen Drucksensor (17) im Saugrohr (3) der Brennkraftmaschine (10), gekennzeichnet durch folgende Verfahrensschritte: Vorsteuern der Drosselklappe (16) in eine erste Stellung, so dass die Drosselklappe (16) fast vollständig geschlossen ist, Erfassen des im Saugrohr (3) herrschenden Druck (pSaugrohr), Ansteuern des Einspritzventils (4), so dass eine Start-Einspritzmenge eingespritzt wird, sobald ein erster Druck-Schwellwert (psi) erreicht oder unterschritten wird, und anschliessendes Regeln des im Saugrohr (3) herrschenden Drucks (pSaugrohr) auf einen vorgegebenen zweiten Druck-Schwellwert (PS2).

## Beschreibung

### Stand der Technik

Brennkraftmaschinen, die mit einer Mischung aus herkömmlichem Ottokraftstoff und Ethanol betrieben werden, sind seit langem bekannt. In Brasilien werden schon seit vielen Jahren Kraftfahrzeuge mit reinem Ethanol (nachfolgend als E100 bezeichnet) betrieben. In Europa und den USA werden auch Mischungen aus Ethanol und herkömmlichen Kraftstoffen angeboten (sog. E85).

Auf Grund der Verdampfungseigenschaften von E100 ist der Start der Brennkraftmaschine bei niedrigen Außentemperaturen, das heißt bei von weniger als +10° Celsius, bislang nur möglich, wenn zusätzliche Maßnahmen getroffen werden. Beispielsweise ist es möglich, das Rail des Kraftstoffeinspritzsystems zu beheizen und damit den E100 Kraftstoff vorzuwärmen. Es ist auch möglich, die Brennkraftmaschine mit herkömmlichem Ottokraftstoff oder herkömmlichem Kraftstoff mit einer Beimischung von 22% Ethanol (sog. E22) zu starten und später, wenn die Brennkraftmaschine eine ausreichende Betriebstemperatur erreicht hat, auf den Betrieb mit E100 umzuschalten. Diese Maßnahmen sind wirkungsvoll, aber sehr teuer und erfordern zusätzliche Bauteile. Die oben genannte Grenztemperatur von +10° Celsius bezieht sich auf den Betrieb mit reinem Ethanol. Bei anderen Kraftstoffen oder Kraftstoffmischungen ändert sich diese Grenztemperatur.

Man kann Brennkraftmaschinen mit Fremdzündung mit einem Drucksensor im Saugrohr auszurüsten und den Druck im Saugrohr durch eine entsprechende Ansteuerung der Drosselklappe auf einen vorgegebenen Wert einregeln. Allerdings kann eine solche Brennkraftmaschine nicht mit reinem Ethanol betrieben werden.

### Offenbarung der Erfindung

Die Erfindung geht aus von einer Brennkraftmaschine, die mit reinem Ethanol betreibbar ist und mindestens ein Einspritzventil, eine Zündkerze, eine Drosselklappe und einen Drucksensor im Saugrohr der Brennkraftmaschine aufweist.

Bei der erfindungsgemäßen Brennkraftmaschine ist es möglich, durch Vorsteuern der Drosselklappe in eine erste Stellung, die einer fast geschlossenen Drosselklappe entspricht, dem Erfassen des im Ansaugrohr während des Anlassvorgangs/ des Startvorgangs herrschenden Drucks, und dem Ansteuern des Einspritzventils, so dass eine zum Start der Brennkraftmaschine erforderliche Einspritzmenge an Kraftstoff eingespritzt wird, sobald ein erster Druck-Schwellwert erreicht oder unterschritten wird und eine einschließende Regelung des im Saugrohr herrschenden Drucks auf einen vorgegebenen zweiten Druck Grenzwert das Startverhalten der Brennkraftmaschine, die mit reinem Ethanol oder einem anderen alternativen Kraftstoff oder einer EthanolKraftstoff-Mischung betrieben wird, auch bei niedrigen Außentemperaturen, insbesondere unter + 10° C, soweit zu verbessern, dass zusätzliche Hilfsmaßnahmen oder bauliche Einrichtungen nicht mehr erforderlich sind.

Bei dem erfindungsgemäßen mehrstufigen Verfahren wird durch das Vorsteuern der Drosselklappe sichergestellt, dass unmittelbar nach dem Betätigen des Anlassers sich rasch ein ausreichend niedriger Druck im Saurohr und bei geöffneten Einlassventilen auch im Brennraum der Brennkraftmaschine einstellt. Wenn dieser erste Druckgrenzwert erreicht wurde, dann kann erfindungsgemäß über das Einspritzventil eine zum Start der Brennkraftmaschine erforderliche Einspritzmenge eingespritzt werden und kurz vor Erreichen des Zündpunktes dieses Kraftstoffluftgemischs gezündet werden. Weil der Druck im Saugrohr und im Brennraum ausreichend niedrig ist, verdampft das Ethanol, das entweder direkt in den Brennraum oder in das Saurohr eingespritzt wird, rasch und es wird ein zündfähiges Kraftstoff-Luft-Gemisch gebildet.

In Folge dessen findet eine erste Zündung in einem der Brennräume der Brennkraftmaschine statt, die Drehzahl der Brennkraftmaschine nimmt zu und in Folge dessen würde bei unveränderter Stellung der Drosselklappe der Druck im Saugrohr noch weiter absinken.

Erfindungsgemäß ist nun vorgesehen, dass nach der ersten Zündung beziehungsweise dem ersten Einspritzvorgang der im Saugrohr herrschende Druck auf einen zweiten Druckgrenzwert geregelt wird. Dieser zweite Druckgrenzwert ist höher als der erste Druckgrenzwert, um zu erreichen, dass die Verbrennung die Temperatur insbesondere der Brennkraftmaschine erhöht und die Verdampfung des Kraftstoffs begünstigt wird. Ein höherer Druck führt wiederum zu einem schnelleren Hochlauf der Brennkraftmaschine.

Dadurch ist einerseits sichergestellt, dass der Druck im Saugrohr und im Brennraum ausreichend niedrig ist, um den eingespritzten Ethanolkraftstoff oder die eingespritzte Kraftstoffmischung rasch zu verdampfen.

Die erfindungsgemäße Kombination aus Vorsteuerung der Drosselklappe und Anschließen der Regelung des Drucks im Saugrohr gewährleistet einerseits optimale Verdampfungsbedingungen für den eingespritzten Ethanolkraftstoff und andererseits stehen die größtmöglichen Freiheitsgrade für die Steuerung der Stellglieder der Brennkraftmaschine, wie zum Beispiel Drosselklappe, Injektoren und/oder der Ventilsteuerung, für die anderen Regelkreise der Brennkraftmaschine zur Verfügung. Daraus ergibt sich ein sehr zuverlässiger, komfortabler und emmisionsarmer Start der nach dem erfindungsgemäßen Verfahren betriebenen Brennkraftmaschine.

Ein weiterer großer Vorteil des erfindungsgemäßen Verfahrens ist darin zu sehen, dass lediglich ein Drucksensor im Saugrohr benötigt wird und andere Starthilfsmittel, wie zum Beispiel die Heizung der Druckrails oder ein Zusatztank mit herkömmlichem Otto-Kraftstoff entfallen können. Dadurch ist die erfindungsgemäße Brennkraftmaschine kostengünstiger und wartungsärmer.

Die in den Ansprüchen 2 und 3 beanspruchten Druckgrenzwerte beziehungsweise die Obergrenzen dieser Druckgrenzwerte haben sich in praktischen Versuchen als optimaler Kompromiss zwischen einerseits einer guten Verdampfung des Ethanols unmittelbar nach der Einspritzung und andererseits der Reduktion der minimalen Androsslung der Brennkraftmaschine beim Start erwiesen. Je geringer nämlich die Androsslung der Brennkraftmaschine ist, desto weniger Arbeit muss der Anlasser leisten und desto leichter erreicht der Anlasser die Startdrehzahl der Brennkraftmaschine. Häufig sind der erste Druckgrenzwert und der zweite Druckgrenzwert gleich sind.

Als "Starttemperatur" im Sinne der Erfindung wird die Temperatur bezeichnet, die zu Beginn des Startvorgangs im Saugrohr der Brennkraftmaschine herrscht.

Eine weitere Verbesserung des Startverhaltens kann erreicht werden, wenn der Einspritzzeitpunkt und/oder der Zündzeitpunkt der Brennkraftmaschine beim Start der Brennkraftmaschine angepasst wird.

Als Folge des geänderten Drucks verschiebt sich auch der optimale Zündzeitpunkt. Dieser Zusammenhang ist durch Messungen und/oder thermodynamische und chemische Modellbildungen zu ermitteln.

Eingespritzt wird entweder im Saughub in die noch unkomprimierte und daher kalte Verbrennungsluft oder/und im Kompressionshub, wenn die Verbrennungsluft schon komprimiert wurde und daher wärmer ist. In der Regel wird die Einspritzung mit einem Schwerpunkt im Kompressionshub bevorzugt. Die erfindungsgemäße Androsselung der Verbrennungsluft kann aber zu einer Verschiebung des Hauptteils der Einspritzung in den Saughub führen.

In einer weiteren vorteilhaften Ausgestaltung der Erfindung ist vorgesehen, dass die erste Stellung der Drosselklappe so gewählt wird, dass der zum Start der Brennkraftmaschine bei der durch den Anlasser der Brennkraftmaschine erreichten Startdrehzahl, ein zum Start der Brennkraftmaschine erforderlicher Mindestluftmassenstrom angesaugt werden kann. Selbstverständlich ist diese Startdrehzahl keine feste Größe, denn es kann beispielsweise bei einer schwachen Batterie oder einer aus anderen Gründen abgesenkter Bordnetzspannung die Startdrehzahl niedriger sein als bei einer neuwertigen und vollgeladenen Starterbatterie.

Die eingangs genannten Vorteile werden auch durch ein Computerprogramm, ein elektrisches Speichermedium sowie eine Steuer und/oder Regeleinrichtung für Brennkraftmaschinen gemäß den nebengeordneten Ansprüchen 8 bis 10 erreicht.

Die Erfindung wird im Folgenden im Detail unter Bezugnahme auf ein Ausführungsbeispiel und unter Bezugnahme auf die beigefügte Zeichnung beschrieben. In der Zeichnung zeigen:
- Fig. 1: einen schematischen Aufbau einer erfindungsgemäßen Brennkraftmaschine mit Direkteinspritzung;
- Fig. 2: den Regelkreis des erfindungsgemäßen Verfahrens und
- Figur 3: ein Ablaufdiagramm des erfindungsgemäßen Verfahrens.

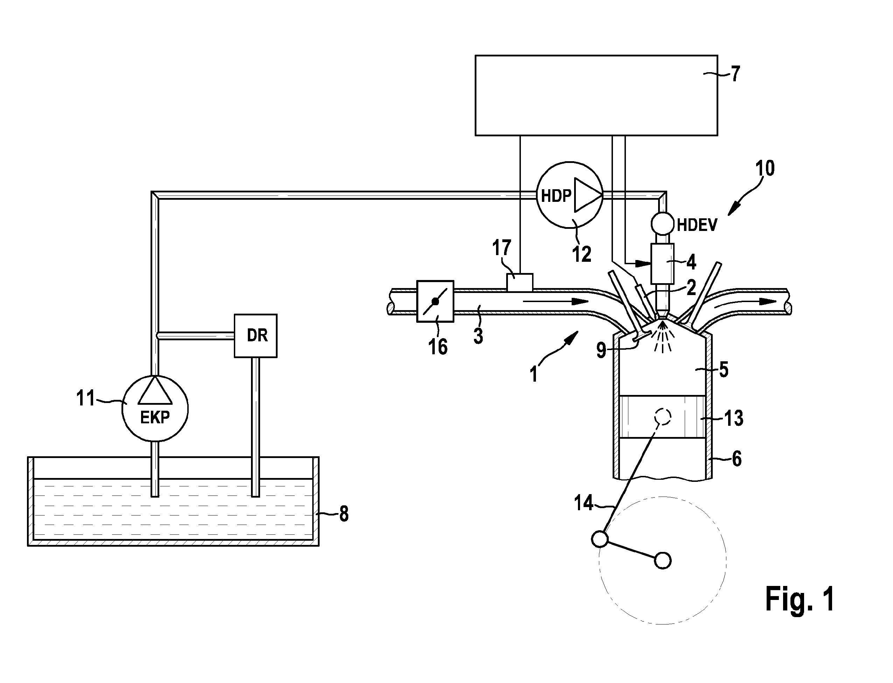

In der Fig. 1 ist in einer schematischen Ansicht ein Ausführungsbeispiel einer Brennkraftmaschine 10, die zur Durchführung des erfindungsgemäßen Verfahrens geeignet ist, mit Direkteinspritzung gezeigt. Alternativ ist auch eine Saugrohreinspritzung möglich (nicht dargestellt). Ein Einspritzventil 4 spritzt Kraftstoff, hier bevorzugt einen ethanolhaltigen Kraftstoff mit einem Ethanolgehalt von bis zu 100 % direkt in den Brennraum 5 des Zylinders 6.

Eine Kraftstoffleitung (ohne Bezugszeichen), über welche Kraftstoff des Einspritzventils 4 zugeführt wird, ist mit einer Hochdruckkraftstoffpumpe 12 versehen, so dass Kraftstoff mit hohem Druck direkt in die Brennräume 5 eingespritzt werden kann. Im Zylinderkopf der Brennkraftmaschine 10 ist eine Zündkerze 2 angeordnet mit deren Hilfe der eingespritzte Kraftstoff, zum Beispiel Ethanol, entzündet wird.

In einem Saugrohr 3 der Brennkraftmaschine 10 ist eine Drosselklappe 16 angeordnet. Stromabwärts der Drosselklappe 16 ist ein Drucksensor 17 vorhanden, der den Druck im Saugrohr 3 misst.

Der Kraftstoff wird von einem Kraftstofftank 8 über eine Kraftstoffpumpe 11 zu einer Hochdruckpumpe HDP gefördert und dort auch auf den erforderlichen Einspritzdruck gebracht.

Die erfindungsgemäße Brennkraftmaschine bei diesem Ausführungsbeispiel nach der Fig. 1 ist ferner mit einer Motorsteuerung 7 versehen, mit welcher unter anderem die Zündkerze 2, das Einspritzventil 4, und die Drosselklappe 16 steuerbar ist.

Gemäß der vorliegenden Erfindung ist die Motorsteuerung 7 so ausgebildet, dass die Brennkraftmaschine 10 auch bei niedrigen Außentemperaturen von weniger als 10° C ohne weiteres mit Ethanol gestartet und betrieben werden kann.

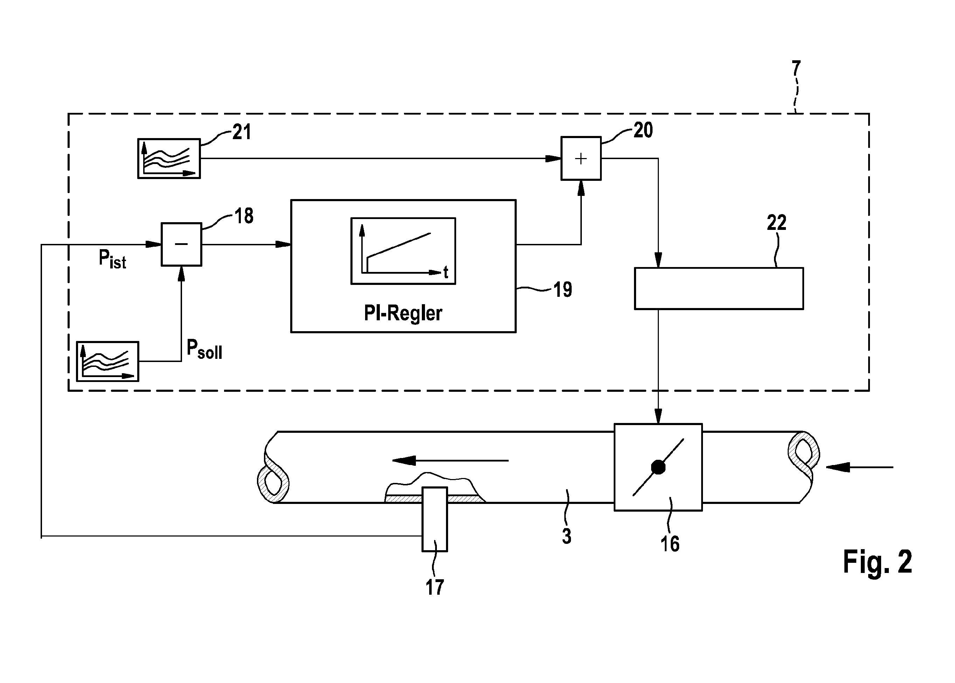

In Figur 2 ist der Regelkreis, zur Regelung des Drucks im Saugrohr gemäß dem erfindungsgemäßen Verfahren schematisch dargestellt. Die angesaugte Verbrennungsluft durchströmt, anders als in Figur 1, das Saugrohr 3 von rechts nach links. In Folge dessen ist der Drucksensor 17 in der Figur 2 links der steuerbaren Drosselklappe 16 im Ansaugrohr 3 angeordnet.

Ein Ausgangssignal des Drucksensors 17 geht über eine Signalleitung in die Steuer und/oder Regeleinrichtung 17 und wird dort als Ist-Wert des Drucks pᵢₛₜ in einen Verknüpfungspunkt 18 geführt. In den Verknüpfungspunkt 18 werden auch Druck-Soll-Werte pₛₒₗₗ aus einem Kennfeld oder Kennlinie eingeführt. Die Differenz aus Ist-Wert pᵢₛₜ und Soll-Wert pₛₒₗₗ wird anschließend in einen Regler 19, der bevorzugt als PI-Regler ausgebildet ist, geführt. Der Ausgang des PI-Reglers 19 wird zu einer zweiten Verknüpfungsstelle 20 geführt und dort mit den Werten eines Kennfelds oder einer Kennlinie 21, die der Vorsteuerung der Drosselklappe 17 beim Start der Brennkraftmaschine dienen, zusammengeführt. Aus dem Kennfeld 21 wird ein Soll-Luftmassenstrom ausgegeben. In entsprechender Weise gibt auch der PI-Regler 19 einen Luftmassenstrom aus.

Diese beiden Soll-Luftmassenströme werden in 21 addiert und in einem Umrechnungsmodul 22 in einen Drosselklappenwinkel umgesetzt. Das Ausgangssignal des Moduls 22 ist demzufolge ein Drosselklappenwinkel mit dem die Drosselklappe 16 angesteuert wird.

Auf Grund der erfindungsgemäßen Regelung des Drucks im Saugrohr 3 stromabwärts der Drosselklappe 16 kann, unabhängig von eventueller Fertigungstoleranz oder Verschleiß der Drosselklappe 16, der elektrischen Spannung im Bordnetz beim Startvorgang, ein konstanter Unterdruck im Saugrohr 3 bereit gestellt werden. Dadurch ist sichergestellt, dass ein ausreichend niedriger Unterdruck im Saugrohr herrscht, so dass die Verdampfung des Ethanols im Saugrohr oder im Brennraum gewährleistet ist und damit die Brennkraftmaschine problemlos anspringt.

Es versteht sich von selbst, dass der in Figur 2 dargestellte Regelkreis nur ein Regelkreis von mehreren Regelkreisen ist, die von dem Steuergerät 7 betrieben werden.

Man kann vor allem beim Start der Brennkraftmaschine, der ja ein hochdynamischer Vorgang ist, die verschiedenen Parameter und Werte der Brennkraftmaschine, wie zum Beispiel Drehzahl, Abgaszusammensetzung und anderes mehr, als vieldimensionalen Phasenraum oder Zustandsraum beschreiben.

Viele dieser Variablen in dem Zustands- oder Phasenraum werden von verschiedenen Regelkreisen des Steuergeräts und durch das Steuergerät 7 geregelt. Beim Start der Brennkraftmaschine wird jedoch erfindungsgemäß der Trajektorie des Drucks im Saugrohr 3 eine große Priorität vor den anderen Zustandsgrößen eingeräumt, da die Bereitstellung eines ausreichenden Unterdrucks im Saugrohr eine notwendige Bedingung für das Zünden des Kraftstoffluftgemischs in der Brennkraftmaschine und damit des Starts der Brennkraftmaschine ist.

Allerdings erlaubt das erfindungsgemäße Verfahren es auch, den Unterdruck im Saugrohr 3 nur soweit wie unbedingt erforderlich abzusenken, so dass für die Regelung der anderen Variablen des Zustandsraums maximale Freiheitsgrade vorhanden sind. So ist es beispielsweise möglich, den Soll-Wert des Unterdrucks temperaturabhängig zu gestalten. Kurz gesagt wird dann mit absinkender Außentemperatur auch der Soll-Wert des Unterdrucks im Saugrohr 3 abgesenkt.

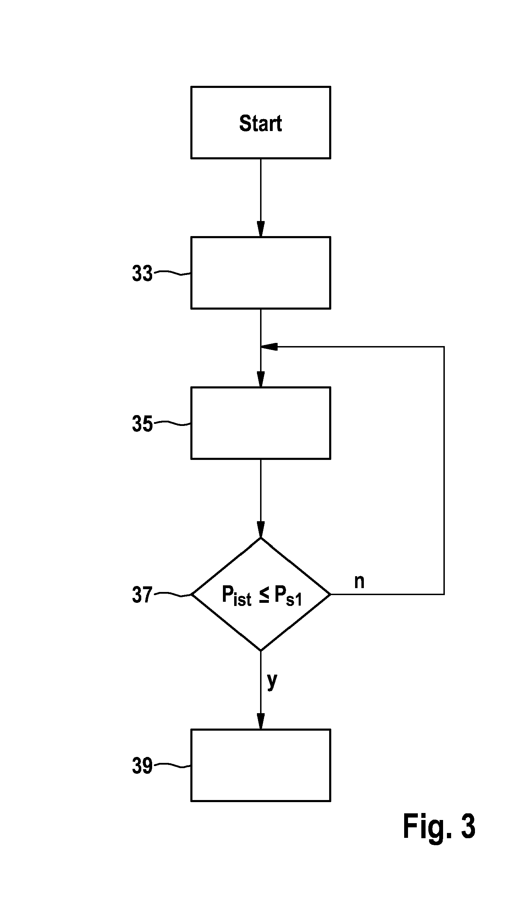

In Figur 3 ist ein Ablaufdiagramm des erfindungsgemäßen Verfahrens als Blockschaltbild dargestellt. Es beginnt in einem Startblock 31.

Davon ausgehend wird in einem Block 33 die Drosselklappe 16 angesteuert. Dabei erfolgt die Vorsteuerung der Drosselklappe auf der Basis des Kennfelds oder der Kennlinie 21, so dass der Einfluss beispielsweise der Außentemperatur auf die Vorsteuerung der Drosselklappe gewährleistet ist.

In einem Block 35 wird dann der Anlasser der Brennkraftmaschine betätigt und parallel dazu der Unterdruck im Saugrohr 3 mit Hilfe des Drucksensors 17 überwacht. Sobald der Druck pᵢₛₜ im Saugrohr 3 einen ersten Grenzwert pₛ₁ erreicht oder unterschreitet, wird Kraftstoff eingespritzt und anschließend wird der Druck im Saugrohr gemäß dem Regelkreis nach Figur 2 in einem Block 39 geregelt.

Das Verfahren endet spätestens dann, wenn die Brennkraftmaschine ihre Betriebstemperatur erreicht hat und in Folge dessen eine gezielte Androsslung des Saugrohrs 3 beziehungsweise der Brennkraftmaschine 10 nicht mehr erforderlich ist.

## Patentansprüche

1. Verfahren zum Starten einer Brennkraftmaschine (10) umfassend mindestens ein Einspritzventil (4), eine Zündkerze (2), eine Drosselklappe (16) und einen Drucksensor (17) im Saugrohr (3) der Brennkraftmaschine (10), **gekennzeichnet durch** folgende Verfahrensschritte:
Vorsteuern der Drosselklappe (16) in eine erste Stellung, so dass die Drosselklappe (16) fast vollständig geschlossen ist,
Erfassen des im Saugrohr (3) herrschenden Druck (p_{Saugrohr}),
Ansteuern des Einspritzventils (4), so dass eine Start-Einspritzmenge eingespritzt wird, sobald ein erster Druck-Schwellwert (pₛ₁) erreicht oder unterschritten wird, und anschließendes
Regeln des im Saugrohr (3) herrschenden Drucks (p_{Saugrohr}) auf einen vorgegebenen zweiten Druck-Schwellwert (pₛ₂).

2. Verfahren nach Anspruch 1, **dadurch gekennzeichnet, dass** der erste Druck-Schwellwert (pₛ₁) in Abhängigkeit vom Verdampfungsdruck des Kraftstoffs bei der Starttemperatur gewählt wird.

3. Verfahren nach Anspruch 1 oder 2, **dadurch gekennzeichnet, dass** der zweite Druck-Schwellwert (pₛ₂) in Abhängigkeit vom Verdampfungsdruck des Kraftstoffs bei der Starttemperatur und der erreichten Erwärmung durch die Verbrennung gewählt wird.

4. Verfahren nach einem der vorhergehenden Ansprüche, **dadurch gekennzeichnet, dass** der erste Druck-Schwellwert (pₛ₁) größer oder gleich dem zweiten Druck-Schwellwert (pₛ₂) ist.

5. Verfahren nach einem der vorhergehenden Ansprüche, **dadurch gekennzeichnet, dass** das Verfahren nur bei Außentemperaturen eingesetzt wird, die niedriger sind als eine von der Dampfdruckkurve des Kraftstoffs abgeleitete Temperaturschwelle.

6. Verfahren nach einem der vorhergehenden Ansprüche, **dadurch gekennzeichnet, dass** das Verfahren nur bei Außentemperaturen kleiner 10 °C eingesetzt wird.

7. Verfahren nach einem der vorhergehenden Ansprüche, **dadurch gekennzeichnet, dass** der zweite Druck-Schwellwert (pₛ₂) zeitlich veränderlich ist.

8. Verfahren nach einem der vorhergehenden Ansprüche, **dadurch gekennzeichnet, dass** die erste Stellung der Drosselklappe (16) so gewählt wird, dass der zum Start der Brennkraftmaschine erforderlichen MindestLuftmassenstrom angesaugt werden kann.

9. Computerprogramm, **dadurch gekennzeichnet, dass** es so hergerichtet ist, dass es alle Schritte eines der beanspruchten Verfahren nach einem der Ansprüche 1 bis 8 durchführen kann.

10. Elektrisches Speichermedium für eine Steuer- und/oder Regeleinrichtung (7) einer Brennkraftmaschine (10), **dadurch gekennzeichnet, dass** auf ihm ein Computerprogramm zur Durchführung der Verfahrensschritte nach einem der Ansprüche 1 bis 8 abgespeichert ist.

11. Steuer- und/oder Regeleinrichtung (7) für eine Brennkraftmaschine (10), **dadurch gekennzeichnet, dass** sie alle Verfahrensschritte nach einem der Ansprüche 1 bis 8 durchführen kann.
